# EUROPÄISCHE PATENTSCHRIFT

(11) **EP 1 087 884 B1**
(45) Veröffentlichungstag und Bekanntmachung des Hinweises auf die Patenterteilung: **24.04.2002**
(21) Anmeldenummer: 99931118.6
(22) Anmeldetag: 19.06.1999
(51) Int. Cl.: B62D 6/00, G01L 3/10, G01L 5/22, B62D 113/00

(54) **ELEKTRISCH UNTERSTÜTZTE HILFSKRAFTLENKUNG FÜR KRAFTFAHRZEUGE**
ELECTRICALLY ASSISTED POWER STEERING SYSTEM FOR MOTOR VEHICLES
DIRECTION ASSISTEE ELECTRIQUEMENT POUR AUTOMOBILES

(30) Priorität: 26.06.1998 DE 19828513
(43) Veröffentlichungstag der Anmeldung: 04.04.2001
(73) Patentinhaber: ZF Lenksysteme GmbH, 73522 Schwäbisch Gmünd (DE)
(72) Erfinder: ABELE, Wolfgang, D-73565 Spraitbach (DE); BRENNER, Peter, D-73563 Mögglingen (DE); BUDAKER, Martin, D-73540 Heubach (DE); NAGEL, Willi, D-71691 Freiberg (DE); NODER, Klaus, D-73568 Dürlangen (DE)
(86) Internationale Anmeldenummer: EP9904279
(87) Internationale Veröffentlichungsnummer: WO0000377

(56) Entgegenhaltungen:
- EP-A- 0 726 452
- DE-A- 3 821 083
- US-A- 4 530 413

## Beschreibung

Die Erfindung betrifft eine elektrisch unterstützte Hilfskraftlenkung für Kraftfahrzeuge nach dem Oberbegriff des Anspruches 1. Die Hilfskraftlenkung enthält eine Eingangswelle, die mit einem Lenkhandrad in Wirkverbindung steht und die zur Übertragung eines für das Lenken von zu lenkenden Rädern erforderlichen Drehmomentes dient. Ein Ausgangsglied steht mit den zu lenkenden Rädern in Wirkverbindung. Ein Servomotor, durch den direkt oder indirekt eine Hilfskraft auf das Ausgangsglied ausgeübt werden kann, ist an der Hilfskraftlenkung angeordnet. Die Eingangswelle und das Ausgangsglied sind über ein drehelastisches Glied derart miteinander verbunden, daß zwischen der Eingangswelle und dem Ausgangsglied eine begrenzte Verdrehbewegung möglich ist. Zum kontaktfreien Erfassen der Richtung und der Stärke eines auf die Eingangswelle wirkenden Lenkdrehmomentes und weiterer lenkungsspezifischer Parameter dient eine berührungsfreie Erfassungseinheit. Die Erfassungseinheit umfaßt wenigstens einen mit der Eingangswelle bzw. dem Ausgangsglied verbundenen Sensor.

Eine derartige Hilfskraftlenkung ist beispielsweise bekannt aus der DE-C2-38 44 578. Bei dieser Hilfskraftlenkung sind zwei Trommeln aus nichtmagnetischem Material mit einer Eingangswelle bzw. mit einem Ausgangsglied verbunden. Die Trommeln sind auf ihrem Umfang oder an ihrer Stirnfläche derart mit magnetisierbaren Medien versehen, daß sie abwechselnd magnetische Nord- und Südpole bilden. Durch Messen der Differenz der Drehwinkel der beiden Trommeln wird unter Verwendung von magnetoresistiven Elementen das Drehmoment erfaßt.

Über die Erfassung des Drehmomentes kann man die Servounterstützung einer Elektrolenkung regeln. Regelt man die Servounterstützung bei einer Elektrolenkung rein drehmomentabhängig, so wird dies im Fahrbetrieb als ungewohnt empfunden, da dann andere Reibungsverhältnisse bestehen als bei einer hydraulisch unterstützten Hilfskraftlenkung. Die "Rückmeldung" der Lenkgeschwindigkeit auf das Lenkmoment fehlt. Um diesen Nachteil auszugleichen, ist eine Erfassung der Lenkgeschwindigkeit notwendig. Für die Erfassung der Lenkgeschwindigkeit wird bei bekannten Elektrolenkungen, beispielsweise in der DE-C2-37 11 854, ein zusätzlicher Sensor vorgesehen. Dieser Sensor weist beispielsweise einen Gleichstrom-Tachogenerator auf, der einen Gleichstrom mit einer an die Lenkgeschwindigkeit angepaßten Spannung erzeugt. Ein derartiger Lenkgeschwindigkeitssensor bedeutet einen relativ großen Aufwand für die Erfassung der Lenkgeschwindigkeit.

Der Erfindung liegt die Aufgabe zugrunde, die Regelung einer gattungsgemäßen, elektrisch unterstützten Hilfskraftlenkung zu verbessern. Insbesondere soll es möglich sein, die lenkungsspezifischen Parameter mit einfachen Mitteln und dadurch kostengünstig zu erfassen.

Diese Aufgabe wird durch die im Anspruch 1 gekennzeichnete Hilfskraftlenkung gelöst. Die Lösung erfolgt insbesondere dadurch, daß bei einer gattungsgemäßen Hilfskraftlenkung die Erfassungseinheit für die Erfassung aller Parameter einen einzigen als Magnetring ausgebildeten Impulsgeber enthält, der an seiner Umfangsfläche oder an seiner Stirnfläche mit magnetischen Nord- und Südpolen in abwechselnder Reihenfolge versehen ist, so daß über zugeordnete Sensoren sowohl die relative Lage der Eingangswelle und des Ausgangsgliedes zueinander als auch die Änderung der Lage der Eingangswelle erfaßt werden. Durch diese Ausführung wird nur ein geringer Montageaufwand nötig. Außerdem werden die Herstellkosten der Lenkung gesenkt, da nur wenige Bauteile benötigt werden.

Zweckmäßige und vorteilhafte Ausgestaltungen der Erfindung sind in den Unteransprüchen angegeben. So kann die elektrische Verbindung zwischen drehenden Teilen der Sensoren und einem feststehenden Sensorgehäuse über eine Wickelfeder erfolgen. Dadurch wird eine einfache und sichere Übertragung der Signale ermöglicht.

Für die elektrische Verbindung zwischen drehenden Teilen der Sensoren und einem feststehenden Sensorgehäuse kann anstelle der Wickelfeder eine Schleifereinheit verwendet werden.

Um auch den absoluten Lenkwinkel mit einfachen Mitteln erfassen zu können, wird an dem Ausgangsglied ein Getriebe angeordnet, durch das eine Mehrzahl von Umdrehungen der Eingangswelle oder des Ausgangsgliedes in kleine Rotationsoder Translationsbewegungen umgewandelt werden kann. Das Getriebe enthält ein mit dem Ausgangsglied oder der Eingangswelle verbundenes Gewinde und eine Gewindemutter, wobei die Gewindemutter durch eine Axialführung axial beweglich aber unverdrehbar geführt ist. Außerdem ist die Gewindemutter mit einem Magneten verbunden, der mit seiner Axialbewegung ein Signal für den absoluten Lenkwinkel erzeugt.

Mit der Verwendung eines solchen Getriebes kann ein magnetoresistiver Sensor, der für die Erfassung von lenkungsspezifischen Parametern, wie Lenkwinkel, Lenkgeschwindigkeit und Lenkbeschleunigung verwendet wird, und ein weiterer magnetoresistiver Sensor, der für die Erfassung des absoluten Lenkwinkels verwendet wird, auf einer gemeinsamen Leiterplatte angeordnet werden und mit einer gemeinsamen Elektronikeinheit zusammenwirken.

Zweckmäßigerweise können die Sensoreinheiten zum Erfassen der lenkungsspezifischen Parameter Drehmoment, Lenkrichtung, Lenkwinkel, absoluter Lenkwinkel, Lenkgeschwindigkeit und Lenkbeschleunigung in einer einzigen Baueinheit zusammengefaßt werden. Dies ergibt wiederum einen geringen Montageaufwand.

Bei Verwendung eines Elektromotors als Servomotor können die gemessenen Parameter für die Regelung der Motordrehzahl in einfacher Weise verwendet werden und hier zu einer besseren Regelgüte führen.

Im folgenden wird die Erfindung anhand dreier in der Zeichnung dargestellter Ausführungsbeispiele näher erläutert.
Es zeigen:
- Fig. 1 bis 3: je einen Längsschnitt durch die erfindungsgemäße Hilfskraftlenkung am Beispiel einer Zahnstangenlenkung in verschiedenen Ausführungsbeispielen und
- Fig. 4: den Längsschnitt durch den Elektromotor nach der Linie IV-IV in Fig. 3.

Die Erfindung wird am Beispiel einer Hilfskraftlenkung mit einem Zahnstangengetriebe erläutert. Mit gleicher Wirkung kann die Erfindung jedoch auch auf andere Hilfskraftlenkungen angewendet werden, beispielsweise solche mit Kugelmuttergetrieben oder solche, bei denen die Servoeinheit in der Lenksäule angeordnet ist.

In einem Lenkgehäuse, kurz als Gehäuse 1 bezeichnet, ist ein mit einer Ritzelwelle 2 verbundenes Ritzel 3 drehbar gelagert. Das Ritzel 3 stellt ein Ausgangsglied dar, das über eine Zahnstange 4 mit nicht dargestellten, zu lenkenden Rädern in Wirkverbindung steht. Anstelle des Ritzels 3 steht bei einer Kugelmutterlenkung eine Gewindespindel. Die Ritzelwelle 2 ist über einen Drehstab 5 mit einer Eingangswelle 6 des Lenkgetriebes verbunden. Anstelle des Drehstabs 5 kann ein anderes drehelastisches Glied verwendet werden.

Die Zahnstange 4 steht über ein nicht dargestelltes Untersetzungsgetriebe in trieblicher Verbindung mit einem als Elektromotor 7 ausgeführten Servomotor. Der Servomotor kann auch durch einen Hydromotor gebildet sein.

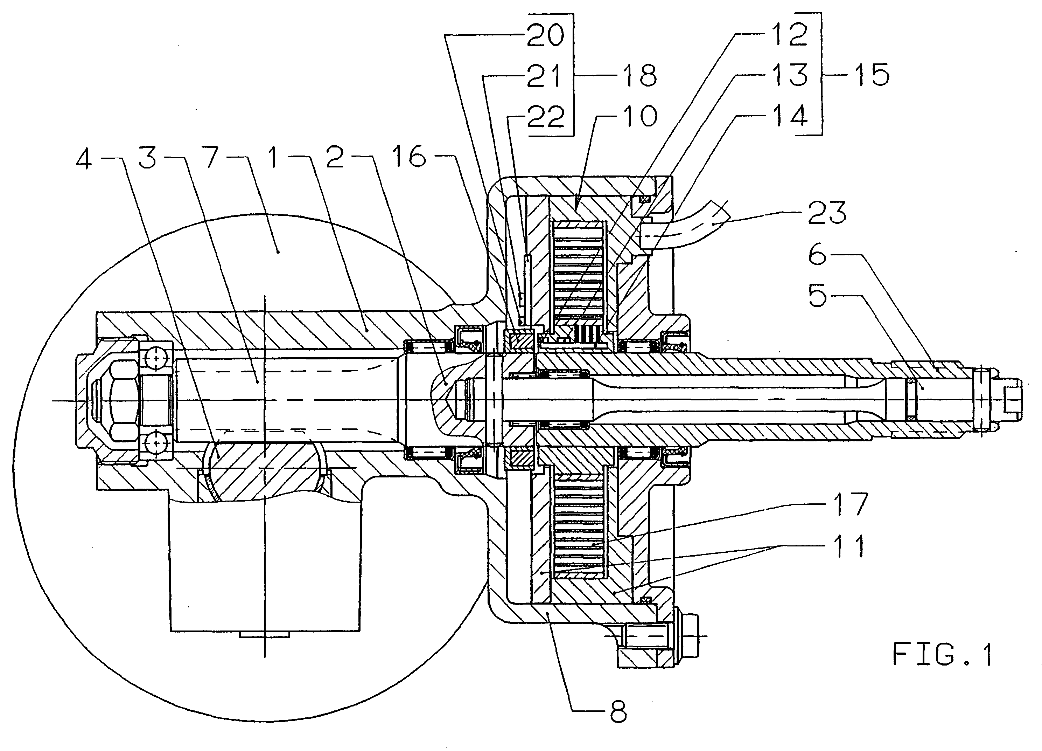

In einem Teil des Gehäuses 1, in dem Ausführungsbeispiel nach Fig. 1 in dem oberen, der Eingangswelle 6 benachbarten Teil, ist eine Erweiterung 8 ausgebildet für die Aufnahme einer Erfassungs-Einheit 10.

Die Erfassungs-Einheit 10 enthält ein Sensorgehäuse 11, das in dem Ausführungsbeispiel zweiteilig ausgeführt ist. In dem Sensorgehäuse 11 ist ein magnetoresistiver Sensor 12, nachfolgend kurz MR-Sensor genannt, mit einer zugehörigen Elektronik-Einheit 13 auf einer Leiterplatte 14 montiert. Der MR-Sensor 12, die Elektronik-Einheit 13 und die Leiterplatte 14 bilden zusammen eine Sensor-Einheit 15, die mit der Eingangswelle 6 drehfest verbunden ist.

Auf der Ritzelwelle 2 ist ein Impulsgeber in der Form eines Magnetringes 16 angeordnet. Der Magnetring 16 ist an seiner Umfangsfläche oder an seiner Stirnfläche in abwechselnder Reihenfolge mit magnetischen Nord- und Südpolen versehen. Anstelle des Magnetringes 16 kann der Impulsgeber als Stabmagnet ausgeführt sein. Der Magnetring 16 wirkt zusammen mit dem MR-Sensor 12.

Eine Wickelfeder 17 stellt eine elektrische Verbindung zwischen dem feststehenden Sensorgehäuse 11 und der sich drehenden Sensor-Einheit 15 her. Bei der Wickelfeder 17 handelt es sich um eine flexible, aufgewickelte Flachbandleitung.

Ein an der Eingangswelle 6 anliegendes Drehmoment erzeugt einen Verdrehwinkel zwischen der Eingangswelle 6 und der Ritzelwelle 2. Dieser Verdrehwinkel ist ein Maß für das Drehmoment und wird von der Sensor-Einheit 15 gemessen. Der MR-Sensor 12 mißt nur im Bereich eines Poles.

Zu der Erfassungs-Einheit 10 gehört eine zweite Sensor-Einheit 18, die an einer Stirnseite des Sensorgehäuses 11 angeordnet ist. Damit ist die Sensor-Einheit 18 feststehend ausgebildet. Die Sensor-Einheit 18 enthält einen MR-Sensor 20 und eine Elektronik-Einheit 21, die beide auf einer Leiterplatte 22 montiert sind. Die zweite Sensor-Einheit 18 ist derart angeordnet, daß ihr MR-Sensor 20 mit demselben Magnetring 16 zusammenwirkt wie der erste MR-Sensor 12. Die Sensor-Einheit 18 mißt über mehrere Pole die Bewegung des Magnetringes 16. Aus dem Meßsignal lassen sich der Lenkwinkel, die Lenkgeschwindigkeit und die Lenkbeschleunigung ableiten.

Beide Sensor-Einheiten 15 und 18 liefern ein Meßsignal, aus dem jeweils die Lenkrichtung abgeleitet werden kann. Beide Sensor-Einheiten 15 und 18 bilden zusammen mit der Wickelfeder 17 und dem Sensorgehäuse 11 die Erfassungs-Einheit 10 als einheitliche Baueinheit. Von der Erfassungs-Einheit 10 können die Meßsignale über ein gemeinsames Kabel 23 an eine nicht dargestellte Steuerelektronik-Einheit weitergeleitet werden.

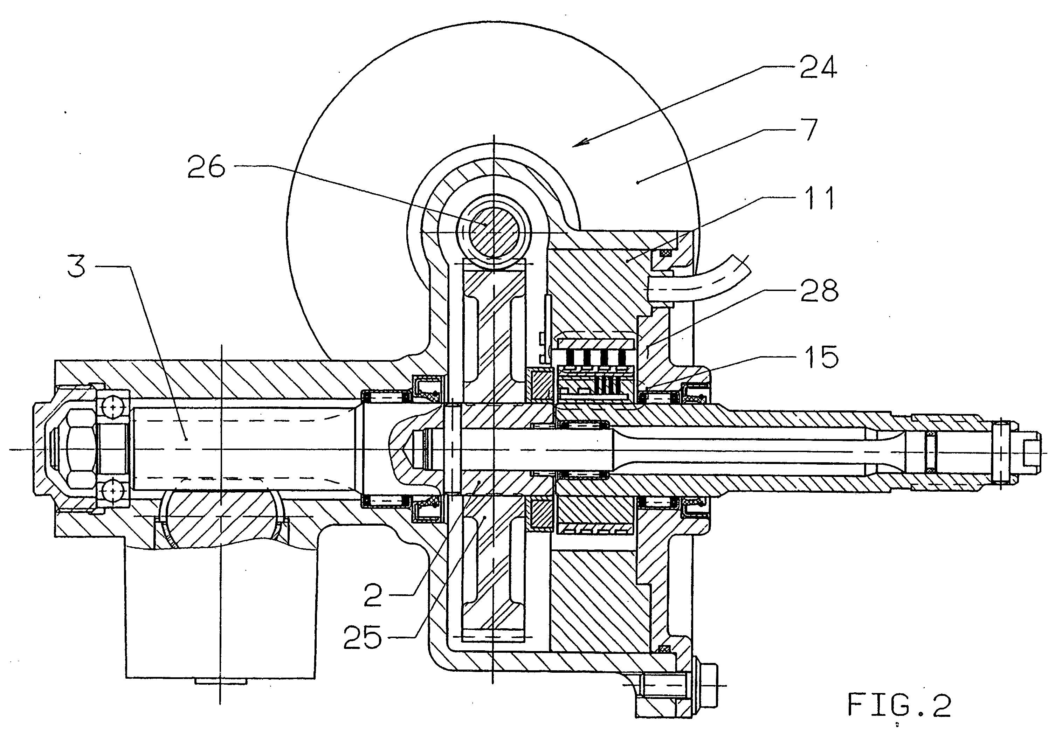

In dem Ausführungsbeispiel nach Fig. 2 steht die Ritzelwelle 2 mit dem Ritzel 3 über ein Zahnrad- oder Schnekkengetriebe 24 in trieblicher Verbindung mit dem Elektromotor 7. Auf der Ritzelwelle 2 ist ein Schneckenrad 25 des Schneckengetriebes 24 befestigt. Mit dem Schneckenrad 25 wirkt eine Schnecke 26 zusammen, die mit einer Abtriebswelle 27 des Elektromotors 7 verbunden ist.

Bei dieser Ausführungsform wird für die elektrische Verbindung zwischen dem feststehenden Sensorgehäuse 11 und der sich drehenden Servo-Einheit 15 anstelle der Wickelfeder 17 eine Schleifer-Einheit 28 verwendet.

Weder die Verwendung der Schleifer-Einheit 28 noch der Wickelfeder 17 ist an die Lage des Elektromotors 7 gebunden. Beide Arten der elektrischen Verbindung können deshalb alternativ bei beiden Ausführungsformen nach Fig. 1 und 2 angewendet werden.

Die übrigen Bauteile des Ausführungsbeispiels nach Fig. 2 entsprechen im wesentlichen den Teilen der Fig. 1.

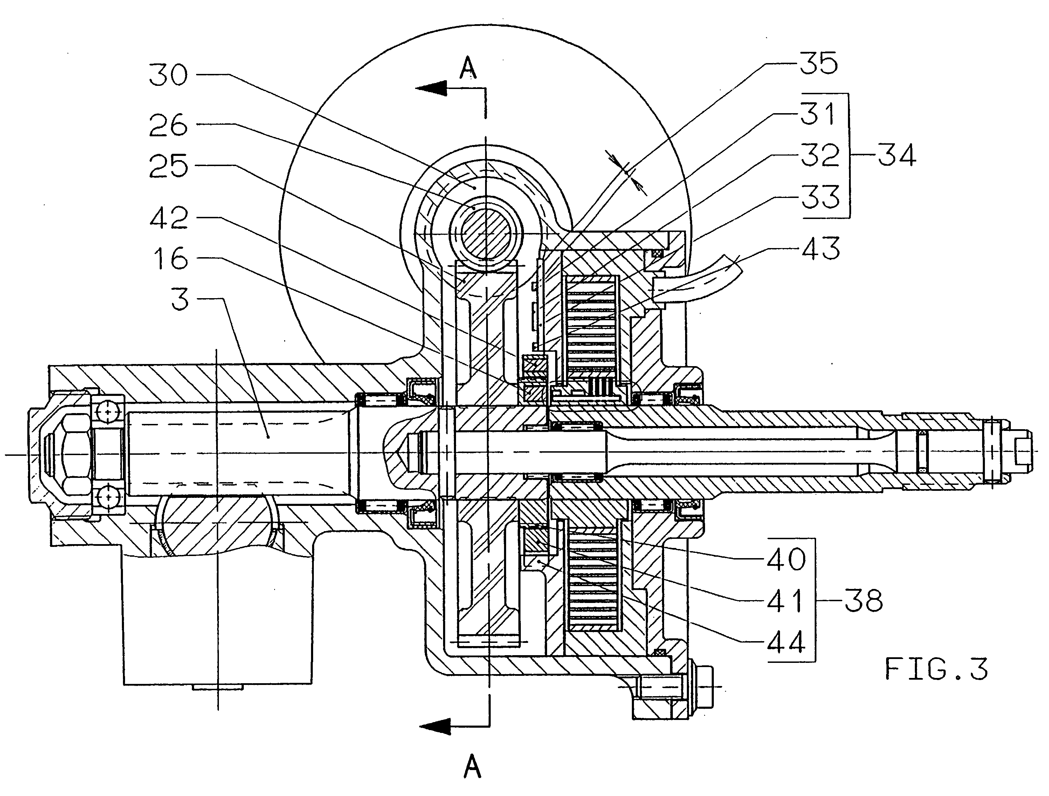

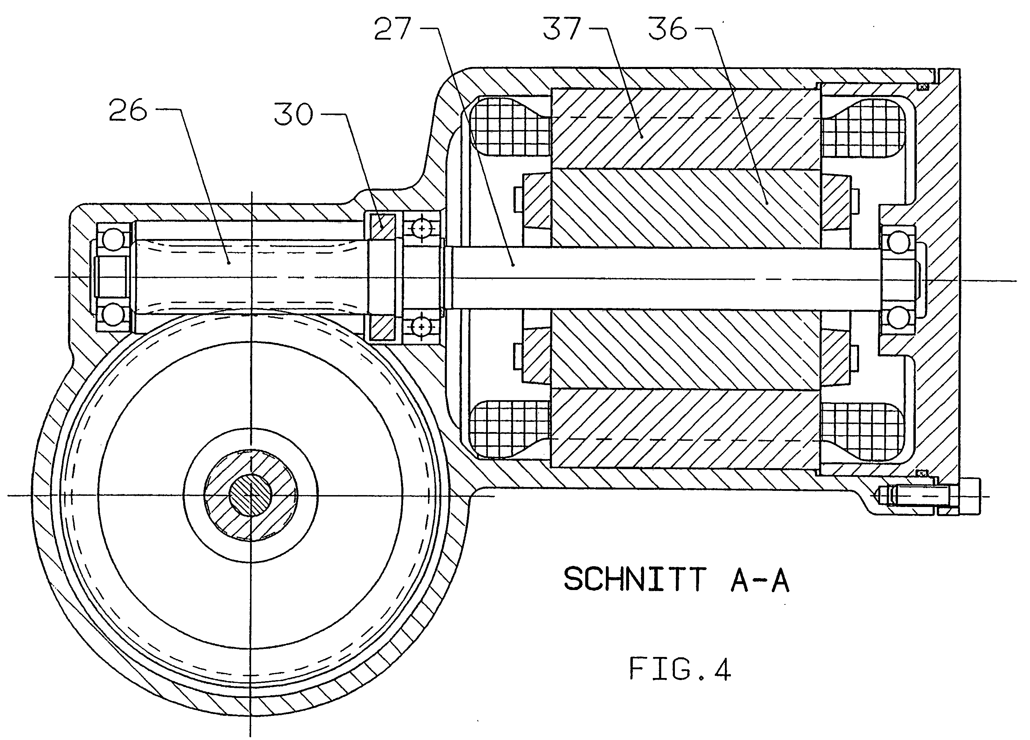

Ein drittes Ausführungsbeispiel wird anhand der Fig. 3 und 4 erläutert. Auf der Schnecke 26 bzw. der Abtriebswelle 27 des Elektromotors 7 ist ein mehrpoliger Magnetring 30 angeordnet. Dieser Magnetring 30 wirkt zusammen mit einem weiteren MR-Sensor 31. Der MR-Sensor 31 bildet zusammen mit einer Elektronik-Einheit 32 und einer Leiterplatte 33 eine Sensor-Einheit 34. Die Positionierung des Magnetringes 30 auf der Schnecke 26 und die Positionierung des MR-Sensors 31 auf der Leiterplatte 33 müssen so zueinander erfolgen, daß zwischen ihnen ein genau definierter Abstand 35 besteht. Dabei ist es möglich, daß der Magnetring 30 auf der gegenüberliegenden Seite des Verzahnungseingriffes auf der Schnecke 26, d. h. entfernt von dem Elektromotor 7, liegt.

Die Hauptkomponenten des Elektromotors 7 sind ein Rotor 36 und ein Stator 37. Der Stator 37 ist gehäusefest, der Rotor 36 ist mit der Abtriebswelle 27 und damit mit der Schnecke 26 verbunden. Über den Magnetring 30 wird die Rotordrehzahl gemessen. Über die Schnecke 26 und das Schnekkenrad 25 des Schneckengetriebes 24 besteht eine mechanische Verbindung zwischen dem Magnetring 30 und dem Ritzel 3. Dadurch kann die Sensor-Einheit 34 außer der Rotordrehzahl auch die Meßgrößen Lenkwinkel, Lenkgeschwindigkeit und Lenkbeschleunigung erfassen. In diesem Fall ist die Auflösung erhöht, da die Übersetzung des Schneckengetriebes 24 die Signale vervielfacht.

Die Eingangswelle 6 und das Ritzel 2 werden im normalen Lenkbetrieb um mehr als 360° gedreht, nämlich etwa zwei bis vier Umdrehungen. Die Sensor-Einheiten 18 und 34 können diesen Winkelbereich nicht absolut erfassen. Deshalb ist an dem Ausgangsglied der Hilfskraftlenkung, nämlich an der Ritzelwelle 2, ein Getriebe 38 angeordnet, durch das eine Mehrzahl von Umdrehungen der Eingangswelle 6 und der Ritzelwelle 2 in kleine Rotations- oder Translationsbewegungen umgewandelt werden kann. Ein Ausführungsbeispiel eines solchen Getriebes 38 ist in Fig. 3 dargestellt. Dabei ist mit der Ritzelwelle 2 ein Gewinde 40 verbunden, durch das eine zugehörige Gewindemutter 41 dann eine kleine Translationsbewegung ausführt, wenn die Ritzelwelle 2 gedreht wird. In dem Ausführungsbeispiel der Fig. 3 ist das Gewinde 40 an dem Magnetring 16 angeordnet, während die Gewindemutter 41 ihrerseits einen Magnet 42 trägt. Damit führt der Magnet 42 die gleiche Axialbewegung aus wie die Gewindemutter 41.
Diese Axialbewegung wird von einem weiteren MR-Sensor 43 erfaßt und ist ein Maß für den absoluten Lenkwinkel. Der MR-Sensor 43 ist zusammen mit dem MR-Sensor 31 auf der gemeinsamen Leiterplatte 33 montiert. Die beiden MR-Sensoren 31 und 43 teilen sich die Elektronik-Einheit 32.

Um zu verhindern, daß die Gewindemutter 41 sich zusammen mit dem Gewinde 40 verdreht, wird die Gewindemutter 41 durch eine Axialführung 44 axialbeweglich, aber unverdrehbar, geführt.

Alternativ zu den Ausführungen in den Fig. 1 bis 3 kann die Sensor-Einheit 15 statt mit der Eingangswelle 6 auch mit der Ritzelwelle 2 verbunden werden. Der Magnetring 16 und der Magnet 42 wären dann auf der Eingangswelle 6 angeordnet. Bei dieser Anordnung kann der Lenkwinkel bzw. die Lenkgeschwindigkeit direkt an der Eingangswelle 6 gemessen werden. Der Verdrehwinkel zwischen der Eingangswelle 6 und dem Ritzel 3 beeinträchtigt nicht das Meßergebnis.

Der Magnetring 16 oder der entsprechende Stabmagnet, der Magnetring 30 und der Magnet 42 können durch andere Impulsgeber, wie beispielsweise ein Zahnrad oder eine Zahnstange, ersetzt werden. Auf die Funktion der Sensorik hat dies keinen Einfluß.

Wesentlich ist, daß für die Funktion der Hilfskraftlenkung ein einziger Magnetring ausreicht. Mit den Ausführungsformen der Fig. 1 und 2 könne die Parameter Drehmoment, Lenkgeschwindigkeit und Lenkbeschleunigung erfaßt werden. Für einen höheren Lenkkomfort, z. B. für einen verbesserten Rücklauf, kann die Funktion der Lenkung durch die Erfassung des absoluten Lenkwinkels, beispielsweise mit dem Getriebe 38 und dem zusätzlichen Magneten 42, erweitert werden.

### Bezugszeichen

- 1: Gehäuse
- 2: Ritzelwelle
- 3: Ritzel
- 4: Zahnstange
- 5: Drehstab
- 6: Eingangswelle
- 7: Elektromotor
- 8: Erweiterung
- 9: -
- 10: Erfassungs-Einheit
- 11: Sensorgehäuse
- 12: MR-Sensor
- 13: Elektronik-Einheit
- 14: Leiterplatte
- 15: Sensor-Einheit
- 16: Magnetring
- 17: Wickelfeder
- 18: Sensor-Einheit
- 19: -
- 20: MR-Sensor
- 21: Elektronik-Einheit
- 22: Leiterplatte
- 23: Kabel
- 24: Schneckengetriebe
- 25: Schneckenrad
- 26: Schnecke
- 27: Abtriebswelle
- 28: Schleifer-Einheit
- 29: -
- 30: Magnetring
- 31: MR-Sensor
- 32: Elektronik-Einheit
- 33: Leiterplatte
- 34: Sensor-Einheit
- 35: Abstand
- 36: Rotor
- 37: Stator
- 38: Getriebe
- 39: -
- 40: Gewinde
- 41: Gewindemutter
- 42: Magnet
- 43: MR-Sensor
- 44: Axialführung

## Patentansprüche

1. Elektrisch unterstützte Hilfskraftlenkung für Kraftfahrzeuge mit folgenden Merkmalen:
- eine Eingangswelle (6) steht mit einem Lenkhandrad in Wirkverbindung, zur Übertragung eines für das Lenken von zu lenkenden Rädern erforderlichen Lenkdrehmomentes,
- ein Ausgangsglied steht mit den zu lenkenden Rädern in Wirkverbindung,
- mit einem Servomotor kann direkt oder indirekt eine Hilfskraft auf das Ausgangsglied ausgeübt werden, wobei die Eingangswelle (6) und das Ausgangsglied über ein drehelastisches Glied derart miteinander verbunden sind, daß zwischen der Eingangswelle (6) und dem Ausgangsglied eine begrenzte Verdrehbewegung möglich ist,
- eine Erfassungs-Einheit (10) dient zum kontaktfreien Erfassen der Richtung und der Stärke eines auf die Eingangswelle (6) wirkenden Lenkdrehmomentes und weiterer lenkungsspezifischer Parameter,
- die Erfassungs-Einheit (10) umfaßt für die Erfassung der Parameter wenigstens einen mit der Eingangswelle (6) bzw. dem Ausgangsglied verbundenen Sensor,
**dadurch gekennzeichnet, daß** die Erfassungs-Einheit (10) für die Erfassung aller für die Funktion der Lenkung erforderlicher Parameter, wie Drehmoment, Lenkgeschwindigkeit und Lenkbeschleunigung, einen einzigen als Magnetring (16) ausgebildeten Impulsgeber enthält, der an seiner Umfangsfläche bzw. stirnseitig mit magnetischen Nord- und Südpolen in abwechselnder Reihenfolge versehen ist, so daß über zugeordnete Sensoren (12, 20, 43) sowohl die relative Lage der Eingangswelle (6) und des Ausgangsgliedes zueinander als auch die Änderung der Lage der Eingangswelle (6) bzw. des Ausgangsgliedes erfaßt werden.

2. Elektrisch unterstützte Hilfskraftlenkung nach Anspruch 1, **dadurch gekennzeichnet, daß** die elektrische Verbindung zwischen drehenden Teilen der Sensoren (12) und einem feststehenden Sensorgehäuse (11) über eine Wickelfeder (17) erfolgt.

3. Elektrisch unterstützte Hilfskraftlenkung nach Anspruch 1, **dadurch gekennzeichnet, daß** die elektrische Verbindung zwischen drehenden Teilen der Sensoren (12) und einem feststehenden Sensorgehäuse (11) über eine Schleifereinheit (28) erfolgt.

4. Elektrisch unterstützte Hilfskraftlenkung nach einem der Ansprüche 1 bis 3, **dadurch gekennzeichnet, daß** an dem Ausgangsglied oder der Eingangswelle (6) ein Getriebe (38) angeordnet ist, durch das eine Mehrzahl von Umdrehungen der Eingangswelle (6) in kleine Rotations- oder Translationsbewegungen umgewandelt werden kann.

5. Elektrisch unterstützte Hilfskraftlenkung nach Anspruch 4, **dadurch gekennzeichnet, daß** das Getriebe (38) ein mit dem Ausgangsglied verbundenes Gewinde (40) und eine Gewindemutter (41) enthält, wobei die Gewindemutter (41) durch eine Axialführung (44) axial beweglich aber unverdrehbar geführt ist.

6. Elektrisch unterstützte Hilfskraftlenkung nach Anspruch 5, **dadurch gekennzeichnet, daß** die Gewindemutter (41) mit einem Magneten (42) verbunden ist, der mit seiner Axialbewegung ein Signal für den absoluten Lenkwinkel erzeugt.

7. Elektrisch unterstützte Hilfskraftlenkung nach einem der Ansprüche 5 bis 6, **dadurch gekennzeichnet, daß** ein magnetoresistiver Sensor (20), der für die Erfassung von lenkungsspezifischen Parametern, wie Lenkwinkel, Lenkgeschwindigkeit und Lenkbeschleunigung verwendet wird, und ein weiterer magnetoresistiver Sensor (43), der für die Erfassung des absoluten Lenkwinkels verwendet wird, auf einer gemeinsamen Leiterplatte (33) angeordnet sind und mit einer gemeinsamen Elektronik-Einheit (32) zusammenwirken.

8. Elektrisch unterstützte Hilfskraftlenkung nach einem der Ansprüche 1 bis 7, **dadurch gekennzeichnet , daß** der Servomotor ein Elektromotor (7) ist.

9. Elektrisch unterstützte Hilfskraftlenkung nach einem der Ansprüche 1 bis 8, **dadurch gekennzeichnet , daß** die Sensor-Einheiten (15, 18, 34) zum Erfassen der lenkungsspezifischen Parameter Drehmoment, Lenkrichtung, Lenkwinkel, absoluter Lenkwinkel, Lenkgeschwindigkeit, Lenkbeschleunigung und Rotordrehzahl des Elektromotors (7) in einer einzigen Baueinheit (Erfassungs-Einheit 10) zusammengefaßt sind.

## Claims

1. Electrically assisted power steering system for motor vehicles having the following features:
- an input shaft (6) is operatively connected to a steering wheel, in order to transmit a steering torque which is necessary for steering wheels to be steered,
- an output element is operatively connected to the wheels to be steered,
- power assistance can directly or indirectly be applied to the output element with a servo motor, the input shaft (6) and the output element being connected to one another via a rotationally elastic element in such a way that a limited rotary movement is possible between the input shaft (6) and the output element,
- a sensing unit (10) is used for contactless sensing of the direction and the strength of a steering torque acting on the input shaft (6) and of further steering-specific parameters,
- the sensing unit (10) comprises, for the sensing of the parameters, at least one sensor which is connected to the input shaft (6) or to the output element,
**characterized in that** the sensing unit (10) contains, for the sensing of all the parameters, such as torque, steering speed and steering acceleration, which are necessary for the steering to function, a single pulse transmitter which is embodied as a ring magnet (16) and which is provided on its circumferential face or its ends with magnetic north and south poles in alternating sequence so that the relative position of the input shaft (6) and of the output element with respect to one another and a change of position of the input shaft (6) or of the output element be sensed by means of assigned sensors (12, 20, 43).

2. Electrically assisted power steering system according to Claim 1, **characterized in that** the electrical connection between rotating parts of the sensors (12) and a fixed sensor housing (11) is made by means of a flat spiral spring (17).

3. Electrically assisted power steering system according to Claim 1, **characterized in that** the electrical connection between rotating parts of the sensors (12) and a fixed sensor housing (11) is made by means of a slider unit (28).

4. Electrically assisted power steering system according to one of Claims 1 to 3, **characterized in that** a gearbox (38) by means of which a multiplicity of revolutions of the input shaft (6) can be converted into small rotational or translational movements is arranged on the output element or the input shaft (6).

5. Electrically assisted power steering system according to Claim 4, **characterized in that** the gearbox (38) contains a thread (40) connected to the output element and a thread nut (41), the thread nut (41) being guided by an axial guide (44) in an axially movable but non-rotatable fashion (6).

6. Electrically assisted power steering system according to Claim 5, **characterized in that** the thread nut (41) is connected to a magnet (42) which generates a signal for the absolute steering angle with its axial movement.

7. Electrically assisted power steering system according to one of Claims 5 to 6, **characterized in that** a magnetoresistive sensor (20) which is used for sensing steering-specific parameters such as steering angle, steering speed and steering acceleration, and a further magnetoresistive sensor (43) which is used for sensing the absolute steering angle, are arranged on a common printed circuit board (33) and interact with a common electronics unit (32).

8. Electrically assisted power steering system according to one of Claims 1 to 7, **characterized in that** the servo motor is an electric motor (7).

9. Electrically assisted power steering system according to one of Claims 1 to 8, **characterized in that** the sensor units (15, 18, 34) for sensing the steering-specific parameters of torque, steering direction, steering angle, absolute steering angle, steering speed, steering acceleration and rotational speed of the rotor of the electric motor (7) are combined in a single physical unit (sensing. unit 10).

## Revendications

1. Direction assistée électriquement pour véhicules automobiles, ayant les caractéristiques suivantes:
- un arbre d'entrée (6) est en liaison coopérante avec un volant de direction, pour la transmission d'un couple de direction nécessaire pour la direction de roues à diriger,
- un organe de sortie est en liaison coopérante avec les roues à diriger,
- un servomoteur permet d'exercer directement ou indirectement une force d'assistance sur l'organe de sortie, l'arbre d'entrée (6) et l'organe de sortie étant connectés l'un à l'autre par le biais d'un organe élastique à rotation, de telle sorte qu'entre l'arbre d'entrée (6) et l'organe de sortie un mouvement de rotation limité soit possible,
- une unité de détection (10) sert à la détection sans contact de la direction et de l'intensité d'un couple de direction agissant sur l'arbre d'entrée (6) et d'autres paramètres spécifiques à la direction,
- l'unité de détection (10) comprend, pour la détection des paramètres, au moins un capteur connecté à l'arbre d'entrée (6) ou à l'organe de sortie,
**caractérisée en ce que** l'unité de détection (10) pour la détection de tous les paramètres nécessaires pour la fonction de direction, comme le couple, la vitesse de direction et l'accélération de direction, contient un générateur d'impulsions unique réalisé sous la forme d'une bague magnétique (16), qui est pourvu sur sa face périphérique ou sur sa face frontale de pôles magnétiques nord et sud en succession alternée, de sorte que la position relative de l'arbre d'entrée (6) et de l'organe de sortie l'un par rapport à l'autre ainsi que la variation de la position de l'arbre d'entrée (6) ou de l'organe de sortie puissent être détectées par le biais de capteurs associés (12, 20, 43).

2. Direction assistée électriquement selon la revendication 1, **caractérisée en ce que** la connexion électrique entre les parties rotatives des capteurs (12) et un boîtier de capteur fixe (11) s'effectue par le biais d'un ressort d'enroulement (17).

3. Direction assistée électriquement selon la revendication 1, **caractérisée en ce que** la connexion électrique entre les parties rotatives des capteurs (12) et un boîtier de capteur fixe (11) s'effectue par le biais d'une unité de curseur (28).

4. Direction assistée électriquement selon l'une quelconque des revendications 1 à 3, **caractérisée en ce qu'**un engrenage (38) est disposé sur l'organe de sortie ou l'arbre d'entrée (6), par lequel une pluralité de rotations de l'arbre d'entrée (6) peut être convertie en petits mouvements de rotation ou de translation.

5. Direction assistée électriquement selon la revendication 4, **caractérisée en ce que** l'engrenage (38) contient un filetage (40) connecté à l'organe de sortie et un écrou fileté (41), l'écrou fileté (41) étant guidé de manière axialement déplaçable mais non rotative par un guide axial (44).

6. Direction assistée électriquement selon la revendication 5, **caractérisée en ce que** l'écrou fileté (41) est connecté à un aimant (42), qui génère avec son mouvement axial un signal pour l'angle de direction absolu.

7. Direction assistée électriquement selon l'une quelconque des revendications 5 à 6, **caractérisée en ce qu'**un capteur magnétorésistif (20), qui est utilisé pour la détection de paramètres spécifiques à la direction, comme l'angle de direction, la vitesse de direction et l'accélération de direction, et un autre capteur magnétorésistif (43), qui est utilisé pour la détection de l'angle de direction absolu, sont disposés sur une plaquette de circuits imprimés commune (33) et coopèrent avec une unité électronique commune (32).

8. Direction assistée électriquement selon l'une quelconque des revendications 1 à 7, **caractérisée en ce que** le servomoteur est un moteur électrique (7).

9. Direction assistée électriquement selon l'une quelconque des revendications 1 à 8, **caractérisée en ce que** les unités de capteurs (15, 18, 34) pour la détection des paramètres spécifiques à la direction que sont le couple, le sens de direction, l'angle de direction, l'angle de direction absolu, la vitesse de direction, l'accélération de direction et la vitesse de rotation du rotor du moteur électrique (7), sont rassemblées dans une même unité de construction (unité de détection 10).
